# EUROPÄISCHE PATENTANMELDUNG

(11) **EP 1 215 869 A2**
(43) Veröffentlichungstag der Anmeldung: **19.06.2002**
(21) Anmeldenummer: 01125554.4
(22) Anmeldetag: 25.10.2001
(51) Int. Cl.: H04M 3/42

(54) **Verfahren und Anordnung zum Betrieb einer aus mehreren Teilnehmern bestehenden Teamkonfiguration**

(30) Priorität: 08.12.2000 DE 10061295
(71) Anmelder: SIEMENS AKTIENGESELLSCHAFT, 80333 München (DE)
(72) Erfinder: Berger, Harald, 33100 Paderborn (DE)

(57) **Zusammenfassung**

Verfahren und Anordnung zum Betrieb einer Teamkonfiguration in einer Anordnung mit einer Mehrzahl von Telekommunikationseinrichtungen, wobei die Telekommunikationseinrichtungen gleichrangig miteinander kommunizieren. Hierbei ist für jeden Teilnehmer in jeder Telekommunikationseinrichtung neben den zum normalen Telekommunikationsbetrieb vorgesehenen Prozeßinstanzen eine reale oder eine imaginäre Instanz existiert.

## Beschreibung

Die Erfindung betrifft ein Verfahren zum Betrieb einer Teamkonfiguration innerhalb einer Anordnung von Telekommunikationseinrichtungen - z.B. Telekommunikationsanlagen bzw. - server - nach dem Oberbegriff des Anspruchs 1 sowie eine entsprechende Anordnung.

Derartige Verfahren und Anordnungen sind beispielsweise aus der internationalen Offenlegungsschrift WO 98/15134 und der deutschen Offenlegungsschrift DE 197 52 403 A1 bekannt. Sie basieren auf dem Ansatz einer zentralen Steuerung der Teamfunktionalität innerhalb einer Telekommunikationsanlage oder eines Telekommunikationsservers. Dabei laufen entweder die gesamte Steuerung oder zumindest zentrale Teile der Steuerung der Teamfunktionalität innerhalb einer Telekommunikationsanlage ab. Team-Teilnehmer die an eine andere Telekommunikationsanlage angeschlossen sind, werden beispielsweise über sogenannte Verlängerungsverbindungen von der erstgenannten, steuernden Telekommunikationsanlage - in der Literatur häufig auch als zentrale "Masteranlage" bezeichnet - gesteuert.

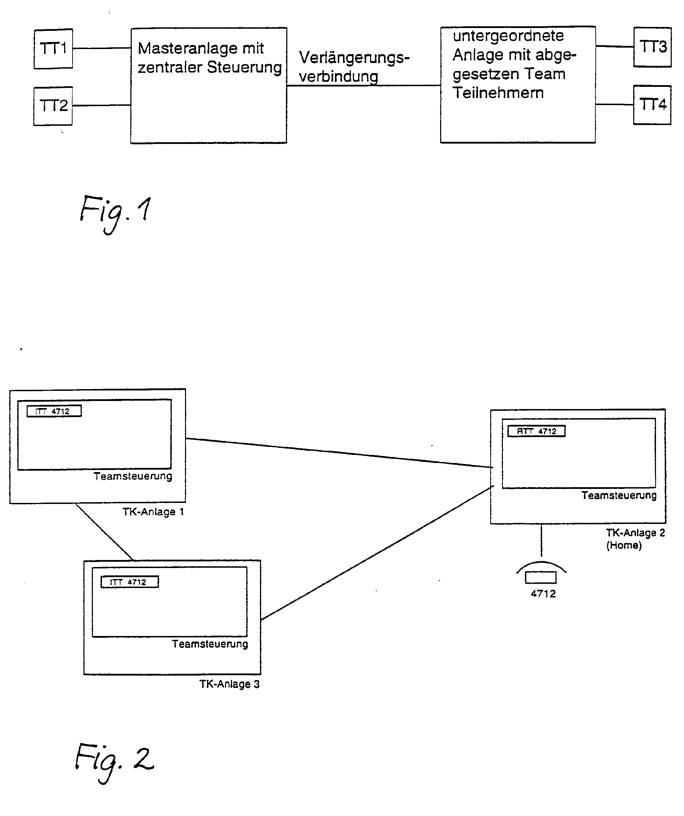

Eine entsprechende Konfiguration ist schematisch in Fig. 1 dargestellt. Diese Figur ist infolge ihrer Beschriftung selbsterklärend und bedarf daher keiner weiteren Erläuterung.

Diese bekannten Lösungen haben im wesentlichen folgende Nachteile:
- Ausfall der Teamfunktionalität in allen abgesetzten Telekommunikationsanlagen bei einem Ausfall der Masteranlage oder bei einem Ausfall der Verbindung zur Masteranlage.
- Beim Ausfall der Masteranlage sind die abgesetzten Team-Teilnehmer nicht mehr erreichbar, können aber selber noch telefonieren.
- Aufgrund der Steuerung der Teamfunktionalität ausgehend von einer zentralen Masteranlage besteht auf der Masteranlage ein erhöhter Performancebedarf.
- Aufgrund der Steuerung jedes einzelnen Team-Teilnehmers ausgehend von einer Masteranlage entsteht ein erhöhtes Signalisierungsaufkommen, da jeder Team-Teilnehmer auf einer abgesetzten Anlage einzeln gesteuert werden muß (z.B. Signalisierung eines Team-Rufes über eine LED einschalten).
- Die beiden obengenannten Punkte bewirken eine schlechte Skalierbarkeit eines derartigen Lösungsansatzes, d.h. große verteilte Teams sind nur schwer realisierbar, da der Signalisierungsaufwand zwischen den abgesetzten Telekommunikationsanlagen und der Masteranlage linear mit der Anzahl der abgesetzten Team-Teilnehmer steigt.

Der Erfindung liegt die Aufgabe zugrunde, ein verbessertes Verfahren der gattungsgemäßen Art sowie eine entsprechende Anordnung anzugeben, die insbesondere eine verbesserte Störsicherheit aufweisen, mit einem geringeren Signalisierungsaufkommen verbunden sind und leichter skalierbar sind.

Diese Aufgabe wird hinsichtlich ihres Verfahrensaspektes durch ein Verfahren mit den Merkmalen des Anspruchs 1 und hinsichtlich ihres Vorrichtungsaspektes durch eine Anordnung mit den Merkmalen des Anspruchs 14 gelöst.

Die Erfindung schließt den grundlegenden Gedanken ein, alle Telekommunikationsanlagen der Teamkonfiguration einander gleichwertig auszuführen, d.h. keiner der Telekommunikationsanlagen eine zentrale Rolle bei der Steuerung der Team-Funktionalität zuzuweisen. Sie schließt weiter den Gedanken ein, für jeden Team-Teilnehmer, der zwar konfiguriert ist, jedoch auf einer Telekommunikationsanlage keine physikalische Entsprechung hat, eine imaginäre Instanz (auch "Schatteninstanz" oder "imaginärer Team-Teilnehmer" = ITT genannt) zu verwenden, die für die Steuerung der Teamfunktionalität genutzt wird. Hingegen gibt es auf derjenigen Telekommunikationsanlage, an welcher der entsprechende Teilnehmer physikalisch angeschlossen ist (seiner "Home-Telekommunikationsanlage") eine reale Instanz (auch als "realer Team-Teilnehmer" = RTT bezeichnet). Die imaginären und realen Instanzen der Team-Teilnehmer, d.h. die Team-Daten, existieren neben den eigentlichen Prozeßinstanzen, die für den herkömmlichen Telefoniebetrieb benötigt werden.

Das Konzept eines "imaginären Team-Teilnehmers" ist in Fig. 2 dargestellt. Ein Teilnehmer mit der Rufnummer 4712 ist an der Telekommunikationsanlage TK-Anlage 2 (Home) physikalisch angeschlossen und somit in der Teamsteuerung dieser Telekommunikationsanlage ein realer Team-Teilnehmer, während er in den Teamsteuerungen der Telekommunikationsanlagen TK-Anlage 1 und TK-Anlage 3 als imaginärer Team-Teilnehmer existiert.

Infolge des dezentralen Ansatzes der Erfindung ergibt sich eine erhöhte Ausfallsicherheit der Gesamtlösung, d.h. der Ausfall einer Telekommunikationsanlage oder der Verbindung zwischen zwei Telekommunikationsanlagen führt nicht zum Verlust der Teamfunktionalität der restlichen Telekommunikationsanlagen des Netzes, sondern nur zum Ausfall der Teamfunktionalität bezüglich der Team-Teilnehmer im ausgefallen Segment des Netzes.

Die Erfindung ermöglicht aufgrund ihrer guten Skalierbarkeit die Realisierung von Teams mit einer großen Anzahl von Teilnehmern in einem Team und einer großen Gesamtanzahl an Team-Teilnehmern insgesamt.

Die Erfindung ermöglicht eine Minimierung der Signalisierung zwischen den Telekommunikationsanlagen und benötigt so eine geringere Übertragungsbandbreite zwischen den Telekommunikationsanlagen als andere Lösungen. Die Lösung ermöglicht somit auch eine Kostenersparnis in Fällen, in denen die Telekommunikationsanlagen örtlich getrennt sind und Mietleitungen für die Verbindung der einzelnen Telekommunikationsanlagen untereinander benötigt werden.

Des weiteren ist die für die Erfindung benötigte Signalisierung zwischen den Telekommunikationsanlagen unabhängig von der genutzten Verbindung zwischen den Telekommunikationsanlagen und kann über verschiedene, auch ungesicherte Verbindungen und Protokolle erfolgen.

Die in der Erfindung beschriebene Lösung erkennt selbständig den Verlust von Signalisierungs-bezogenen Nachrichtenelementen oder den Ausfall einer Partneranlage und, verwaltet beim Erkennen eines solchen Fehlerfalls selbständig alle betroffenen Teilnehmersignalisierungen zurück.

Die Erfindung ist ebenfalls dadurch gekennzeichnet, daß auch Inkonsistenzen in den Teamkonfigurationen der verschiedenen Telekommunikationsanlagen innerhalb des Telekommunikationsnetzes selbständig erkannt werden und schwere Fehlerfälle so vermieden werden können.

Die Erfindung ist dadurch gekennzeichnet, das der Mehraufwand gegenüber einer Teamlösung auf eine einzelne Telekommunikationsanlage gering ist.

Nach obigem sind insbesondere in einer Teamkonfiguration von n Telekommunikationsanlagen jedem Teilnehmer eine einzelne reale Instanz und n-1 imaginäre Instanzen bzw. Schatteninstanzen zugewiesen.

Einer realen Instanz sind stets auch verschiedene Prozeßinstanzen zugeordnet, da diese für den Telefoniebetrieb benötigt werden. Hingegen verfügt eine imaginäre Instanz nicht über derartige Prozesse, da die imaginären Instanzen selbst kein Kommunikationsendgerät steuern, sondern nur zur Weiterverteilung der Rufe einer realen Instanz dienen. In diesem Sinne ist das Verhältnis einer realen Instanz zu der ihr zugehörigen imaginären Instanzen auch als Master-Slave-Verhältnis zu beschreiben.

Ein wesentlicher Vorteil des mit der Erfindung gewählten Ansatzes besteht darin, daß die realen Instanzen und die imaginären Instanzen bis auf das erwähnte Fehlen der zugehörigen Prozeßinstanzen bei den imaginären Instanzen identisch sind.

Die Signalisierung zwischen den Telekommunikationsanlagen erfolgt über einzelne Nachrichtenelemente, die nachfolgend auch als "Datagramme" bezeichnet werden.

Nachfolgend werden im Zusammenhang mit der Erläuterung der Erfindung relevante Begriffe und Abkürzungen erklärt:

### Team

eine Gruppe von Teilnehmern:
- die demselben Rufnummernplan angehören,
- die sich auf verschiedenen vernetzten Telekommunikationsanlagen befinden können,
- deren Rufe innerhalb der Gruppe in Abhängigkeit von der Konfiguration signalisiert werden;
- der Teamnummer zugeordnet ist.
Es können mehrere Teams auf einer Telekommunikationsanlage bzw. in einem Netz von Telekommunikationsanlagen genutzt werden.

### TT - Team-Teilnehmer

Teilnehmer in einem Team, mit folgenden Merkmalen:
- die kommenden Rufe dieses TT können anderen Teilnehmern im selben Team signalisiert werden;
- diesem TT können die kommenden Rufe anderer Teilnehmer im selben Team signalisiert werden;
- der TT kann die Rufe anderer TT übernehmen;
- die Rufe dieses TT können von anderen TT übernommen werden;
- ein TT kann einem anderen TT einen Ruf zuteilen;
- ein TT kann die Anrufverteilung seiner Rufe ein- oder ausschalten;
- ein TT kann die Anrufübernahme für die ihm signalisierten Rufe seiner Team-Partner ein- oder ausschalten.

### RTT - Realer Team-Teilnehmer

Dieser Teilnehmer hat auf der Telekommunikationsanlage, die diesen Teilnehmer betrachtet, eine logische Adresse, hinter der sich eine Rufnummer befindet, und folgende Merkmale aufweist:
- ein RTT ist sowohl auf Einzelanlagen als auch bei vernetzten Telekommunikationsanlagen möglich;
- bei einem RTT im Anlagenverbund wird auch vom Home des TT gesprochen;
- ein RTT kann teilnehmerindividuelle Daten sichern und so z.B. speichern, an welcher Tastenposition ein anderer Team-Partner überwacht wird;
- ein RTT verfügt typischerweise über eine physikalische Entsprechung (d.h. ein angeschlossenes Kommunikationsendgerät); ein RTT kann aber auch ein "virtueller Team-Teilnehmer sein.

### ITT - Imaginärer Team-Teilnehmer

Dieser Teilnehmer befindet sich nicht auf der Anlage, die diesen Teilnehmer betrachtet, d.h. er hat auf dieser Anlage keine physikalische oder virtuelle Entsprechung und natürlich auch keine logische Adresse und folgende weitere Merkmale:
- die Rufnummer dieses Teilnehmers ist im gleichen Wählbaum wie die seiner Team-Partner und verweist auf die Anlassung zu einer anderen Anlage;
- zu einem ITT gehört immer ein RTT;
- bei n-vernetzten Telekommunikationsanlagen gehören zu einem RTT (n-1) ITT's;
- ein ITT hat keine Instanzdaten für ein Kommunikationsendgerät, sondern nur Team-Daten;
- ein ITT kann keine teilnehmerindividuellen Daten sichern;
- die Daten eines ITT's werden u.a. aus den Team-Daten der RTT's der Anlage rekonstruiert;
- ein ITT verteilt die Rufe des zugehörigen RTT einer Partneranlage.

### VTT - Virtueller Team-Teilnehmer

Ein virtueller Team-Teilnehmer ist ein Team-Teilnehmer ohne physikalische Entsprechung, d.h. ein Teilnehmer mit eigener logischen Adresse, eigenen Instanzdaten und eigener Rufnummer, der Team-Rufe verteilen kann, aber über keine zugehörige Physik verfügt und folgende weitere Merkmale hat:
- der VTT kann selbst keinen Ruf annehmen oder gehend eine Leitung belegen;
- der VTT wird z.B. für die Anrufverteilung im Team benutzt;
- ein VTT ist ein Hilfskonstrukt in einer Teamkonfiguration, das, unabhängig von der Vernetzungs-Problematik, dazu genutzt wird, die Anzahl der von extern erreichbaren Rufnummern im Team zu erhöhen, ohne die Anzahl der tatsächlichen Teilnehmer zu erhöhen (So kann ein Teilnehmer z.B. unter 3 verschiedenen Rufnummern erreichbar sein).

### TP - Team-Partner

Alle TT innerhalb eines Teams, außer dem TT selber.

### TK - Team Key

Taste eines TT, der einen TTP überwacht;
- TK's sind entweder vom Konfigurator fest vorgegeben oder können entsprechend der Vorgaben des Konfigurators frei programmiert werden;
- TK's werden durch eine virtuelle Tastenposition der Rufnummer des Team-Partners, die Signalisierungsart und den zugehörigen Rufrythmus beschrieben.

### VTK - Virtual Team Key

Option eines TT einen TP auf eine frei programmierbare Funktionstaste speichern zu können.

### Home

Vom Home eines Team-Teilnehmers spricht man bei vernetzten Telekommunikationsanlagen, wenn es sich um den RTT (s.o.) handelt.

### virtuelle Tastenposition

Eineindeutige Abbildung einer physikalischen Tastenposition (Tastennummer + Angabe Endgerät bzw. Rufnummerngeber) auf einen zusammenhängenden Zahlenbereich.

### logische Adresse

Die logische Adresse ist ein eindeutiger Index zur Adressierung eines Teilnehmers innerhalb einer Telekommunikaitonsanlage (eine Rufnummer stellt nur bei einem einheitlichen Rufnummernplan einen eindeutigen Index dar, prinzipiell werden auch geschlossene Teilnehmergruppen verwandt und es ist möglich, innerhalb von verschiedenen geschlossenen Teilnehmergruppen eine Rufnummer mehrfach zu verwenden).
Eine logische Adresse ist nur innerhalb einer Telekommunikationsanlage ein eineindeutiger Index und gilt nicht anlagen-übergreifend.

### Instanz

Für jeden Teilnehmer werden für den Betrieb verschiedene Prozesse (z.B. LTG, END, TAK) und die dazugehörigen Datenbereiche benötigt.
Diese werden auch als Instanz bzw. Inkarnation dieses Teilnehmers bezeichnet.

### Instanzdaten eines Teilnehmers

Jeder Teilnehmer verfügt über eigene Instanzdaten, die seine aktuellen Stati, seine Konfiguration und seine teilnehmerindividuellen Daten beinhalten. Diese Daten werden teilweise auch gesichert und stehen dann auch nach einem Ausfall der Telekommunikationsanlage wieder zur Verfügung.

### Team-Daten

Das sind diejenigen Daten, die für die Teamfunktionalität benötigt werden, mit folgenden Merkmalen:
- die Team-Daten sind an die Rufnummer und die Teamnummer eines Team-Teilnehmers gebunden;
- über die Instanzdaten eines RTT ist mit Hilfe des Team-Teilnehmer Index (M) ein Zugriff auf die eigenen Team-Daten und die Team-Daten der Team Partner möglich;
- ein zentraler Prozeß (UTI) kann auf die Team-Daten aller Team-Teilnehmer zugreifen;
- ITT's verfügen nur über Team-Daten (es gibt keine Instanz und keine Instanzdaten (END-,LTG und TAK-Prozeß)für einen ITT).

### tti - Team-Teilnehmer Index

Innerhalb der Teamsteuerung einer Telekommunikationsanlage eindeutiger Index, der einen Team-Teilnehmer identifiziert.

### ZBT - Zentrale Betriebstechnik

Derjenige Teil einer Telekommunikationsanlage, der u.a. für die Konfiguration der Telekommunikationsanlage zuständig ist.

### ZVT - Zentrale Vermittlungstechnik

Derjenige Teil in einer Telekommunikationsanlage, der für den Aufbau und die Abwicklung von "klassischen" Vermittlungsfunktionen zuständig ist.

### DHSYM - Devicehändler Symphony

Derjenige Teil der Telekommunikationsanlage, der für die Steuerung von Systemendgeräten zuständig ist.
In diesem DHSYM ist die der Erfindung zugrundeliegende Teamsteuerung realisiert.

### END-, LTG- und TAK-Prozeß

Verschiedene Prozesse für die Steuerung eines Endgerätes innerhalb des DHSYM, die für jeden Teilnehmer einmal vorhanden sind.

### UTI-Prozeß

Zentraler Prozeß innerhalb des DHSYM, der für alle Endgeräte nur einmal existiert.

Vorteile und Zweckmäßigkeiten der Erfindung ergeben sich - neben den oben erwähnten grundsätzlichen Aspekten - aus den Unteransprüchen sowie der nachfolgenden Beschreibung bevorzugter Aspekte und Ausführungsformen der Erfindung anhand der Figuren 3 bis 10.

### Dabei zeigen:

- Fig. 3:: eine schematische Darstellung einer verteilten Teamkonfiguration aus fünf Teilnehmern,
- Fig. 4:: eine Darstellung zur Verteilung eines kommenden Rufes innerhalb des verteilten Teams nach Fig. 3,
- Fig. 5:: eine beispielhafte Darstellung zur Erläuterung der Fehlererkennung und -behandlung bei einer Teamkonfiguration nach Fig. 3,
- Fig. 6:: eine schematische Darstellung zum Aufbau von Telekommunikationsanlagen, aus denen eine Anordnung gemäß einem Ausführungsbeispiel der Erfindung gebildet ist,
- Fig. 7:: eine schematische Darstellung zur Verteilung eines Team-Rufes in einer Einzelanlage gemäß einer Ausführungsform der Erfindung,
- Fig. 8:: eine schematische Darstellung eines netzübergreifenden Routing eines Rufes gemäß einer Ausführungsform der Erfindung,
- Fig. 9:: eine Darstellung eines anlagenübergreifenden Kommunikationsdiagramms bei einer Ausführungsform der Erfindung und
- Fig. 10:: eine schematische Darstellung zur Erläuterung der Speicherorganisation im Zusammenhang mit der Realisierung eines Team-Rufes bei einer Ausführungsform der Erfindung.

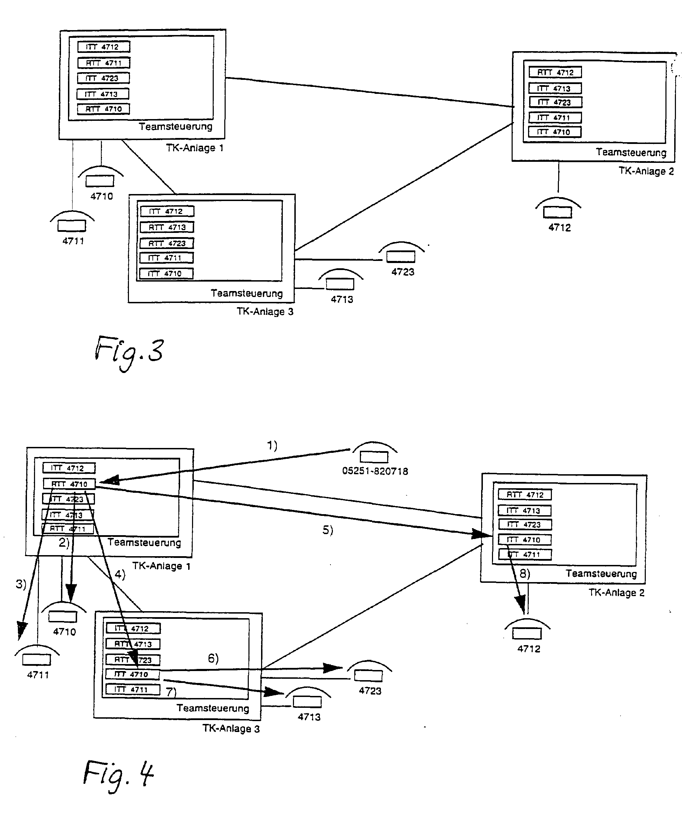

In Fig. 3 ist eine verteilte Teamkonfiguration aus 5 Teilnehmern dargestellt. An der TK-Anlage 1 und der TK-Anlage 3 sind jeweils zwei Team-Teilnehmer physikalisch angeschlossen. An der TK-Anlage 2 ist ein Team-Teilnehmer physikalisch angeschlossen. Dementsprechend verfügen die einzelnen TK-Anlagen über unterschiedliche RTT- und ITT-Instanzen (siehe Tabelle 1).

| Rufnummer | TK-Anlage 1 | TK-Anlage 2 | TK-Anlage 3 |
|---|---|---|---|
| 4710 | RTT | ITT | ITT |
| 4711 | RTT | ITT | ITT |
| 4712 | ITT | RTT | ITT |
| 4713 | ITT | ITT | RTT |
| 4723 | ITT | ITT | RTT |

In Fig. 4 ist ein Fall schematisch dargestellt, bei dem ein kommender Ruf innerhalb des Teams zwischen den TK-Anlagen 1, 2 und 3 verteilt wird.

In einem ersten Schritt 1) wird der kommende Ruf der RTT-Instanz des Teilnehmers 4710 auf der TK-Anlage 1 zugestellt.

In einem zweiten Schritt 2) wird der kommende Ruf dem Teilnehmer 4710 zugestellt, d.h. es klingelt am Kommunikationsendgerät mit der Rufnummer 4710.

In einem dritten Schritt 3) wird der Ruf an den Team-Partner 4711 innerhalb der TK-Anlage 1 verteilt.

In einem vierten Schritt 4) stellt die RTT-Instanz des Teilnehmers 4710 fest, daß dieser Teilnehmer eine Anrufverteilung aktiviert hat und auch von Team-Partnern auf der TK-Anlage 3 überwacht wird. Die RTT-Instanz des Teilnehmers 4710 sendet daraufhin eine Nachricht mit den Parametern des Rufes an die TK-Anlage 3, unabhängig davon, wieviele Teilnehmer auf der TK-Anlage 3 den Teilnehmer 4710 überwachen und unabhängig davon, ob diese Teilnehmer die Anrufübernahme für Team-Rufe aktiviert haben oder nicht.

Hat der Teilnehmer 4710 die Anrufverteilung nicht aktiviert, so werden die Parameter des Rufes zwar zwischengespeichert, die TK-Anlagen 2 und 3 werden aber nicht über diesen Ruf benachrichtigt. Erst wenn der Teilnehmer 4710 die Anrufverteilung aktiviert und in Fällen, in denen der Ruf immer noch ansteht, erfolgt eine Benachrichtigung der TK-Anlagen 2 und 3. In der ITT-Instanz des Teilnehmers 4710 werden die Parameter des kommenden Rufes gespeichert und gegebenenfalls an die Team-Teilnehmer verteilt [siehe folgenden Schritte 5) und 6)].

Gibt es auf der TK-Anlage 2 keine ITT-Instanz für den Teilnehmer 4710, was z.B. bei einer inkonsistenten Datenbasis der vernetzten TK-Anlagen der Fall wäre, so kann dieser Fehlerfall jetzt erkannt werden und eine entsprechende Fehlerreaktion ausgelöst werden.

In einem fünften Schritt 5) stellt die RTT-Instanz des Teilnehmers 4710 fest, daß der Teilnehmer 4710 auch von Team-Partnern auf der TK-Anlage 2 überwacht wird, und sendet auch an die TK-Anlage 2 eine Nachricht [analog zu Schritt 3)].

Der ITT-Instanz des Teilnehmers 4710 wurde in kommender Ruf signalisiert. In einem sechsten Schritt 6) wird dieser Ruf nun an die entsprechenden Team-Partner verteilt. Anhand der Daten der ITT-Instanz des Teilnehmers 4710 auf der TK-Anlage 3 wird festgestellt, daß dieser von dem Teilnehmer 4723 überwacht wird, und über die RTT-Instanz des Teilnehmers 4723 wird ermittelt, daß der Teilnehmer 4723 die Anrufübernahme aktiviert hat. Nun wird dem Team-Teilnehmer 4723 der kommende Ruf derart signalisiert, als wäre es der Team-Ruf für einen Team-Partner der eigenen TK-Anlage 3.

In einem siebten Schritt wird analog zu Schritt 6) dem Teilnehmer 4713 der Team-Ruf signalisiert.

In einem achten Schritt wird analog zu Schritt 6) dem Teilnehmer 4712 auf der TK-Anlage 2 der Team-Ruf signalisiert.

Die vernetzte Signalisierung anderer Vermittlungsstati, wie beispielsweise
- Team-Teilnehmer ist belegt,
- Team-Teilnehmer ist frei,
- Ende des Rufes für den Team-Teilnehmer
erfolgt analog zu der oben beschriebenen Verteilung eines Rufes.

Wird einem Team-Teilnehmer, z.B. der Teilnehmer 4713, ein Ruf für einen Team-Partner, z.B. 4710, auf einer anderen TK-Anlage signalisiert, so kann der Team-Teilnehmer diesen Ruf für seinen Team-Partner annehmen. Dies erfolgt über eine gezielte Rufabfrage, d.h. der Teilnehmer 4713 signalisiert der TK-Anlage 1, daß er den Ruf für den Teilnehmer 4710 annehmen will und die TK-Anlage 1 übergibt diesen Ruf an Teilnehmer 4713 auf der TK-Anlage 3.

Die Erfindung nutzt verschiedene Mechanismen der Fehlererkennung, um ein stabiles Arbeiten eines vernetzten Team zu sichern, so z.B.:
- das Erkennen des Ausfalls einer Partner-TK-Anlage bzw. des Ausfalls der Routingwege zu dieser TK-Anlage,
- das Erkennen dessen, daß eine Partner-TK-Anlage neu hochgelaufen ist,
- das Erkennen von Verlusten einer oder mehrerer Nachrichten in der Kommunikation mit einer Partneranlage,
- das Erkennen von inkonsistenten Teamkonfigurationen.

Erkennt die Teamsteuerung eine gestörte Kommunikation zu einer Partneranlage, so werden alle Signalisierungen von Vermittlungsstati, die diese TK-Anlage betreffen, zurückverwaltet, d.h. ein anstehender Team-Ruf wird automatisch durch ein "Ruf aus" beendet, unabhängig davon, ob der Partner noch gerufen wird oder nicht. In dem Zeitraum, der benötigt wird, die Querbeziehungen zu der ausgefallenen Partneranlage zurückzuverwalten, werden keine neuen Anreize von der ausgefallen Partneranlage akzeptiert. Nachdem alle Rufstati zurückverwaltet wurden, steht die Teamfunktionalität bezüglich der ausgefallenen TK-Anlage nicht mehr zur Verfügung.

Erhält die TK-Anlage nun wieder einen Anreiz von der vorher ausgefallenen Partneranlage, beginnt die Signalisierung von Rufstati erneut, d.h. die anlagenübergreifende Funktionalität steht nun wieder zur Verfügung. Aus Performancegründen erfolgt beim "Erstkontakt" oder beim "Wiedertreffen" der vernetzten TK-Anlagen kein Refresh aller Vermittlungsstati der Team-Teilnehmer.

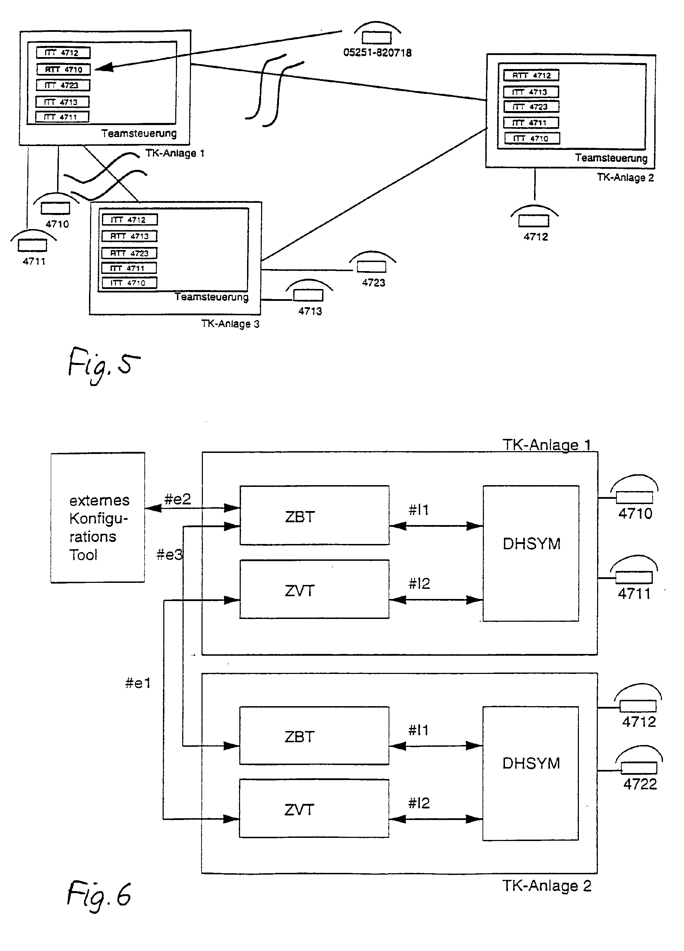

In Fig. 5 wird angenommen, daß die Verbindungen der TK-Anlage 1 zu den TK-Anlagen 2 und 3 durchgetrennt sind. Die Amtsverbindung der TK-Anlage 1 ist aber erhalten geblieben und der Teilnehmer 4710 wird weiterhin gerufen. Dem Team-Partner 4711 auf der TK-Anlage 1 wird der Ruf auch weiterhin signalisiert und der Ruf kann auch angenommen werden.

Die Teamsteuerungen der TK-Anlagen 2 und 3 erkennen - etwa nach einem bestimmten Zeitraum, oder beim Versuch den Ruf für den Team-Partner 4710 anzunehmen - daß die Verbindung zu der TK-Anlage 1 unterbrochen ist. Die Signalisierung des Rufes für den Team-Teilnehmer 4710 wird nun selbständig durch die Teamsteuerungen der TK-Anlagen 2 und 3 rückverwaltet und nicht wie im "normalen" Betrieb durch die TK-Anlage 1. Die Teamfunktionalität der TK-Anlagen 2 und 3 ist nun um die Teilnehmer Anlage 1 eingeschränkt, so wie auch auf der Anlage 1 nur noch lokale Teamfunktionalität zur Verfügung steht.

Die netzübergreifende Funktionalität der TK-Anlagen 2 und 3 ist aber noch voll vorhanden, d.h. erhält der Teilnehmer 4723 der TK-Anlage 3 nun einen Ruf, so wird dieser Ruf auch bei dem Team-Teilnehmer 4712 auf der TK-Anlage 2 signalisiert. Hierin zeigt sich die größere Robustheit der beschriebenen Lösung gegenüber einer nicht vollständig dezentralen Lösung, wie sie z.B. in der internationalen Offenlegungsschrift WO 98/15135 beschrieben ist.

Die Konfiguration der netzübergreifenden Teams erfolgt durch ein Programm, das auf einer der TK-Anlagen läuft oder auf einem externen Rechner gestartet wird. Dieses Programm läuft unabhängig von der eigentlichen Teamsteuerung und wird für den eigentlichen Betrieb des Teams nicht benötigt, sondern nur für die netzübergreifende Konfiguration.

Die Teamkonfiguration ist für die Konsistenz der Daten der verteilten Teams zuständig und ermöglicht es, neue Team-Teilnehmer in ein Team aufzunehmen, Teilnehmer aus einem Team zu löschen oder die Vorgaben, welcher Team-Teilnehmer welchen Team-Partner monitoren darf, zu ändern. Hierzu fordert dieses Programm die aktuelle Teamkonfiguration von den einzelnen TK-Anlagen an und arbeitet dann mit den Daten der "realen Team-Teilnehmer" (RTT).

Die anlagenweit angebotene Teamfunktionalität entspricht der in der deutschen Offenlegungsschrift DE 197 52 403 A1 beschriebenen Teamfunktionalität einer Einzelanlage. Es werden folgende Teamleistungsmerkmale realisiert:
(1) Signalisierung von Team-Rufen (konfigurationsabhängig)
   - akustisch (Normalruf oder Kurzruf)
   - im Display des entsprechenden Endgerätes
   - an der LED der entsprechenden Team-Taste am Endgerät (blinken)
(2) Signalisierung von Besetztzuständen über die LED der entsprechenden Team-Taste am Endgerät
(3) die Möglichkeit, einen Team-Ruf anzunehmen
   - über die Team-Taste am Endgerät
   - über einen entsprechenden Menüpunkt im Display, auch wenn es die korrespondierende Team-Taste physikalisch gar nicht gibt, z.B. an einem DECT-Mobiltelefon
(4) die Möglichkeit, einem Team-Teilnehmer über die zugehörige Team-Taste direkt zu rufen
(5) die Möglichkeit, einem Team-Teilnehmer über die zugehörige Team-Taste ein Gespräch zuzuteilen
(6) die Möglichkeit, die Verteilung der eigenen Rufe im Team zu aktivieren oder zu deaktivieren
   - über eine separate Funktionstaste
   - über einen Menüpunkt
(7) die Möglichkeit, die Signalisierung anderer Team-Rufe am eigenen Endgerät zu aktivieren oder zu deaktivieren
   - über eine separate Funktionstaste
   - über einen Menüpunkt
(8) die Möglichkeit, die Art der Signalisierung eines Team-Rufes über eine Team-Taste am Endgerät frei zu programmieren (Tastenposition, Signalisierungsart, d.h. die Art des Rufes [Kurz, Normal, Still, ...], Displaysignalisierung [Ja/nein] ...)
(9) die Verwendung virtueller Team-Teilnehmer, d.h. von Team-Teilnehmern, die über keine Physik verfügen, aber über eine eigene Rufnummer, deren Rufe im Team verteilt werden.

Der Aufbau einer TK-Anlage, wie sie in der Erfindung genutzt wird, und die verschiedenen zugehörigen Module, Tasks bzw. Prozesse sind früher bereits ausführlich beschrieben worden und wird im folgenden nur kurz skizziert.

In Fig. 6 sind zwei vernetzte TK-Anlagen vereinfacht dargestellt. Die Teamsteuerung ist hierbei dem Komplex DHSYM zugeordnet. Die Endgeräte mit Teamfunktionalität werden durch den DHSYM gesteuert. Der DHSYM kommuniziert über die internen Schnittstellen #l1 und #l2 mit den Komponente ZBT und ZVT.

Über die Schnittstelle #l1 erfolgt die Kommunikation, die für die Konfiguration der Team-Daten notwendig ist. Über die Schnittstelle #l2 erfolgt die Kommunikation, die für die anlagenübergreifende Rufsignalisierung innerhalb vernetzter Teams notwendig ist.

Der DHSYM adressiert über die ZVT-Komponente der eigenen TK-Anlage die externe Schnittstelle #e1 und darüber die ZVT-Komponente der Partneranlage, die diese Signalisierung an den DHSYM der Partneranlage weiterreicht. Die externen Schnittstellen #e2 und #e3 dienen der ZBT-Komponente u. a. zur Konfiguration von anlagenübergreifenden Teams.

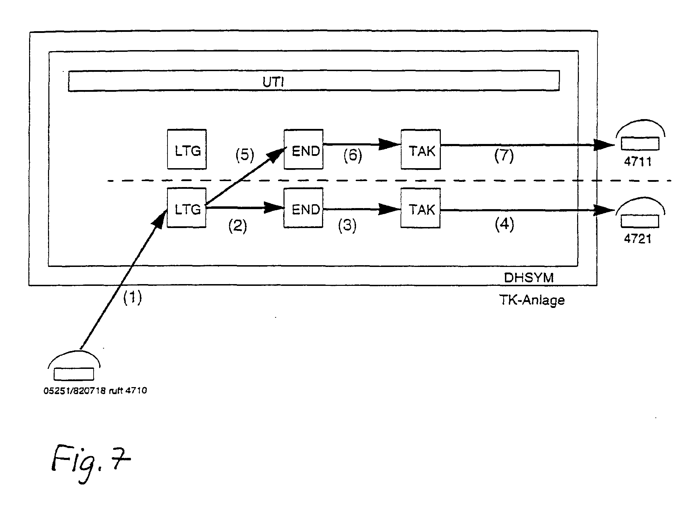

In Fig. 7 ist die Verteilung eines Rufes innerhalb einer Einzelanlage dargestellt. Der Teilnehmer 4710 erhält einen Ruf: (1). Dieser Ruf wird am eigenen Endgerät signalisiert: (2) bis (4). Anhand der Team-Daten wird in der LTG-Komponente des Teilnehmers 4710 festgestellt, das der Teilnehmer 4711 den Teilnehmer 4710 aktiv monitort und auch beim Teilnehmer 4711 wird der Ruf signalisiert: (5) bis (7).

Die hier dargestellte Steuerung eines Endgerätes durch die drei Prozesse LTG, END und TAK ist nur beispielhaft für die konkrete Umsetzung der Erfindung. Prinzipiell kann die der Erfindung zugrunde liegende Teamsteuerung auch mit einer anders strukturierten Endgerätesteuerung zusammenarbeiten (z.B. nur einen Prozeß je Endgerät).

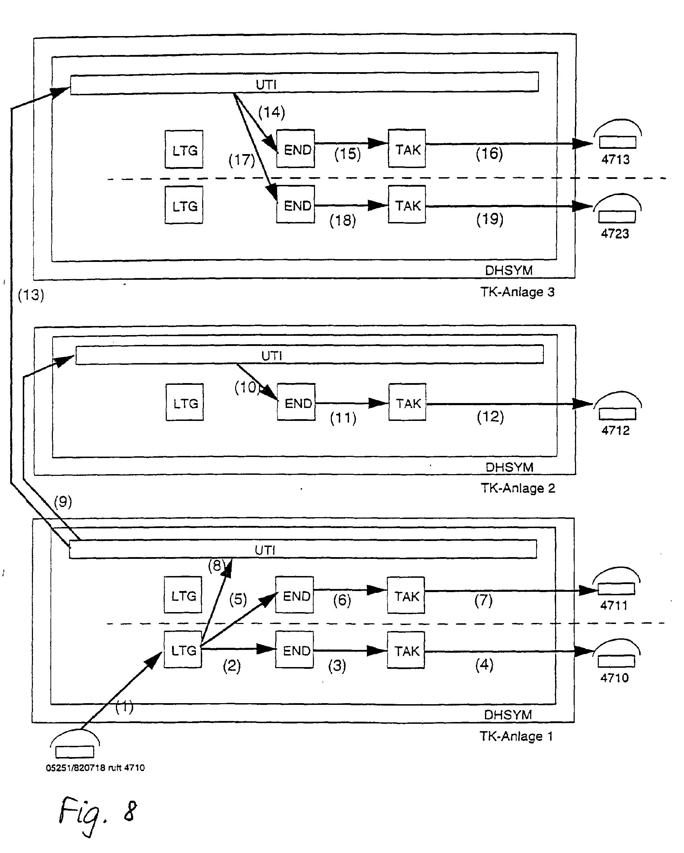

In Fig. 8 ist das netzübergreifende Routing eines Team-Rufes dargestellt. Wie bereits in *Fig.* 7 wird der Teilnehmer 4710 gerufen.

Die Abläufe des Routings [(1) bis (7)] innerhalb der TK-Anlage 1 sind mit denen einer Einzelanlage identisch. Durch einen Zugriff auf die Team-Daten stellt der LTG-Prozeß des gerufenen Teilnehmers 4710 nun fest, daß dieser Teilnehmer 4710 auch von Team-Partnern auf anderen TK-Anlagen überwacht wird, und der LTG-Prozeß sendet eine Nachricht an den globalen UTI-Prozeß (8).

Dieser UTI-Prozeß hat den Zugriff auf die Team-Daten aller Teilnehmer (ITT & RTT). Der UTI-Prozeß ermittelt nun anhand der Team-Daten auf welchen TK-Anlagen des Netzes der Teilnehmer 4710 noch überwacht wird und erstellt so eine Liste mit den betroffenen TK-Anlagen zusammen. An jede betroffene TK-Anlage, d.h. an jede TK-Anlage im Netz, an der mindestens ein Team-Teilnehmer den Teilnehmer 4710 überwacht, wird nun eine Nachricht [(9) und (13)] gesendet, die folgende Informationen enthält:
- der Teilnehmer 4710 wird gerufen
- der Teilnehmer 4710 ist im Team Nr.2
- die Parameter des Rufes, z.B.:
   - wenn bekannt, die Rufnummer und den Namen des Rufers
   - den Rufrythmus
   - die Teilnehmerart des Rufers etc.

In den TK-Anlagen 2 und 3 wird nun nach Erhalt der Nachrichten (9) und (13) untersucht, ob es in den Team-Daten der Anlagen 2 und 3 einen "imaginären Team-Teilnehmer" mit der Rufnummer 4710 gibt, der im Team Nr. 2 ist.

Ist das nicht der Fall, so handelt es sich um eine inkonsistente Teamkonfiguration und nun kann eine Fehlerbehandlung einsetzen, z.B. kann eine Fehlermeldung abgesetzt werden.

Wurde aber eine ITT-Instanz zu der Rufnummer 4710 im Team Nr. 2 gefunden, so werden zuerst die Daten des Rufes (Rufnummer des Rufers, ...) in den Daten der ITT-Instanz zwischengespeichert. Danach wird anhand der Daten des ITT ermittelt, welche realen Team-Teilnehmer der entsprechenden TK-Anlage 2 und 3 den Teilnehmer 4710 monitoren. Für jeden dieser Team-Teilnehmer wird nun ermittelt, ob er die Anrufübernahme im Team aktiviert hat.

Für alle betroffenen RTT generiert nun der UTI-Prozeß eine Nachricht an den END-Prozeß des RTT [(10), (14) und (17)]. In dieser Nachricht wird als Absender des LTG-Prozesses der Teilnehmer 4710 vorgetäuscht, d.h. für den END-Prozeß und die folgenden Abläufe [(11), (12), (15), (16), (18) und (19)] verhält sich die Signalisierung des Team-Rufes analog zu einer Einzelanlage.

Hatte nun aber ein RTT, z.B. 4723 auf der TK-Anlage 3, die Anrufübernahme nicht aktiviert, der Ruf steht noch an und der Teilnehmer aktiviert nun doch die Anrufübernahme, so kann der Ruf anhand der in den ITT-Daten zwischengespeicherten Rufdaten auch verzögert zugestellt werden. Hat der Teilnehmer 4710 aber die Anrufverteilung ausgeschaltet und wird er gerufen, so werden die Daten des Rufes in den Team-Daten des Teilnehmers (RTT) zwischengespeichert, aber nicht verteilt. Schaltet der Teilnehmer 4710 nun die Anrufverteilung ein und der Ruf steht immer noch an, so wird der Ruf anhand der in der Team-Daten zwischengespeicherten Daten verteilt.

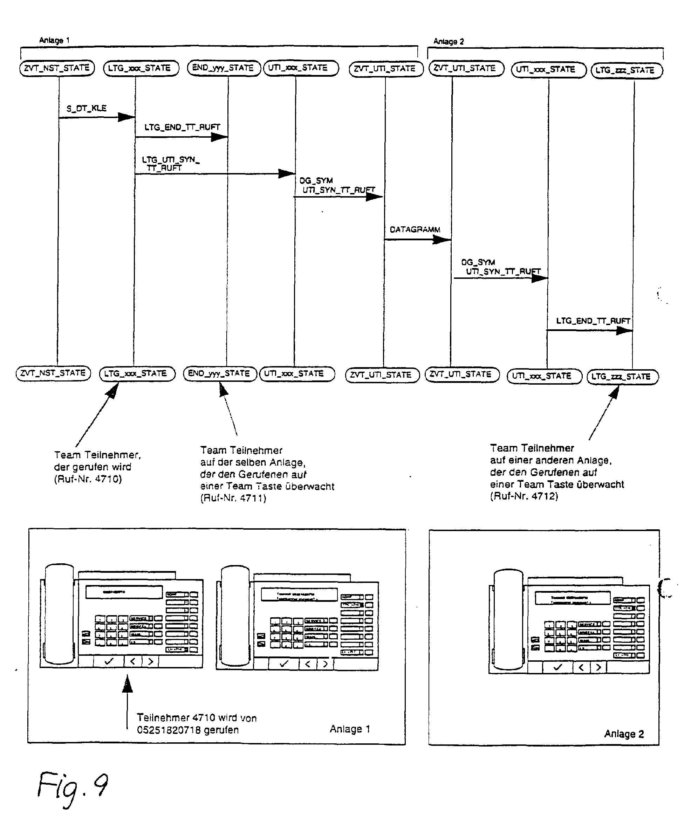

In Fig. 9 ist das anlagenübergreifende Routen eines Team-Rufes als Kommunikationsdiagramm dargestellt.

Die Komponente ZVT sendet die Nachricht S_DT_KLE an den LTG-Prozeß des Teilnehmers 4710 und signalisiert ihm so, daß er gerufen wird. Mit der Nachricht LTG_END_TT_RUFT signalisiert der LTG-Prozeß des Teilnehmer 4710 dem END-Prozeß des Teilnehmers 4711 den Team-Ruf. Mit der Nachricht LTG_UTI_SYN_TT_RUFT wird das anlagenübergreifende Routing eingeleitet. Der UTI-Prozeß sendet nun die Nachricht DG_SYM/UTI_SYN_TT_RUFT an die ZVT-Komponente. Die routet das Datagramm dann zu der TK-Anlage 2.

Auf der TK-Anlage 2 sendet dann die ZVT-Komponente die Nachricht DG_SYM/UTI_SYN_TT_RUFT weiter an den UTI-Prozeß. Der UTI-Prozeß ermittelt dann die betroffenen Instanzen der Team-Partner und sendet die Nachricht LTG_END_TT_RUFT an den Teilnehmer 4712.

Die Strukturierung der Team-Daten wurde bereits früher eingehend beschrieben.

Die Team-Daten eines Teilnehmers wurden um zusätzliche Parameter für das anlagenübergreifende Routing erweitert; so z.B. der Anlagennummer eines TT.

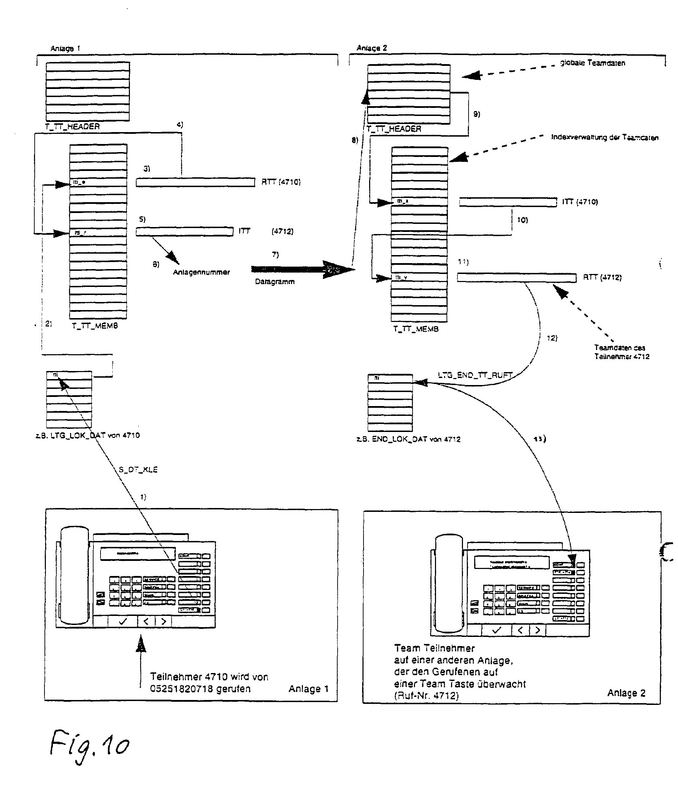

Fig. 10 zeigt eine schematische Darstellung zur Erläuterung der Speicherorganisation im Zusammenhang mit der Realisierung eines Team-Rufes.

Der Zugriff auf die Daten wird am Beispiel der anlagenübergreifenden Signalisierung eines Team-Rufes dargestellt.
Ein Team-Teilnehmer (Ruf-Nr. 4710) auf Anlage 1 wird vom Amt (Ruf-Nr. 05251820718) gerufen. Ein weiterer Team-Teilnehmer (Ruf-Nr. 4712) im selben Team, aber auf einer anderen Anlage (Anlage 2), überwacht den Gerufenen auf einer Team-Taste (Team Key). An der LED dieser Team-Taste, über einen Kurzruf und im Display wird der kommende Ruf des Team-Partners beim Teilnehmer (4712) signalisiert.
1) Dem LTG-Prozeß des Teilnehmers 4710 wird die Nachricht S_DT_KLE zugestellt.
2) Aus den lokalen Daten des LTG-Prozesses (LTG_LOK_DAT) des Teilnehmers wird der Team-Teilnehmer Index *(gp->tti)* des Teilnehmers 4710 ermittelt.
3) Mit Hilfe des tti kann auf die dynamischen Daten des Team-Teilnehmers 4710 zugegriffen werden (es handelt sich hierbei um einen RTT, d.h. der TT verfügt über Instanzdaten auf dieser Anlage).
4) Aus den dynamischen Team-Daten des Teilnehmers 4710 werden die Team-Teilnehmer-Indizes derjenigen Teilnehmer ermittelt, an die der kommende Ruf verteilt werden soll; in diesem Fall der tti des Teilnehmers 4712.
5) Anhand des so gefundenen tti des Teilnehmers 4712 kann auf die dynamischen Team-Daten des Teilnehmers 4712 zugegriffen werden; auf der TK-Anlage 1 ist der Teilnehmer 4712 ein ITT, d.h. es gibt keine Instanzdaten für diesen Teilnehmer auf der TK-Anlage 1.
6) Den dynamischen Team-Daten des Teilnehmers 4712 wird die Anlagennummer entnommen, auf der dieser Teilnehmer sein Home hat, d.h. das der Teilnehmer dort RTT ist.
7) Über ein Datagramm wird die TK-Anlage 2 von dem kommenden Ruf benachrichtigt.
8) Im Datagramm ist die Information enthalten, daß der kommende Ruf für den Teilnehmer 4710 verteilt werden soll; aus den globalen Verwaltungsdaten des Teams wird auf der TK-Anlage 2 für die Rufnummer 4710 der tti ermittelt.
9) Mit dem tti des Teilnehmers 4710 wird auf die dynamischen Team-Daten des Teilnehmers 4710 auf der Anlage 2 zugegriffen; der Teilnehmer 4710 ist auf der TK-Anlage 2 ein ITT.
10) Aus den dynamischen Team-Daten des Teilnehmers 4710 auf der TK-Anlage 2 wird der tti desjenigen Teilnehmers ermittelt, dem auf dieser TK-Anlage 2 der Ruf zugestellt werden soll (muß auf dieser Anlage RTT sein).
11) Anhand dieses tti wird auf die dynamischen Daten des Teilnehmers 4712 zugegriffen.
12) Hat der Teilnehmer 4712 die Anrufübernahme aktiviert und verfügt er über eine reale Team-Taste die den Team Partner 4710 überwacht, so wird die END-Prozeßinstanz des Teilnehmers 4712 ermittelt und dem END-Prozeß die Nachricht LTG_END_TT_RUFT zugestellt.
13) Der END-Prozeß steuert dann die Signalisierung des Team-Rufes, d.h. die Rufart, die Displaysignalisierung und die LED-Steuerung.

Die Team-Teilnehmer Indizes *(tfi)* der verschieden TK-Anlagen können für ein und denselben Teilnehmer auf den unterschiedlichen TK-Anlagen verschiedene Werte annehmen, d.h. der Gültigkeitsbereich eines tti ist auf eine Anlage beschränkt.

Das Erkennen inkonsistenter Team Konfigurationen wurde bereits weiter oben beschrieben.

Das Erkennen fehlender Nachrichten basiert auf der einfachen Numerierung jeder Nachricht, die von der Teamsteuerung einer TK-Anlage zu einer anderen TK-Anlage gesendet wird. Die Teamsteuerung jeder einzelnen TK-Anlage speichert beim Erhalt einer Nachricht von einer Partneranlage die Nummer der zuletzt empfangenen Nachricht in einer Liste zwischen (ein Eintrag für jede Partneranlage). Wird nun die nächste Nachricht von der Partneranlage empfangen, so wird die zwischengespeicherte Nummer mit der Nummer der neuen Nachricht verglichen. Ist die Nummer der neuen Nachricht um eins größer als die der zwischengespeicherten, so ist keine Nachricht verloren gegangen und die Abarbeitung der Rufsignalisierung kann normal erfolgen. Ist das Delta zwischen der zwischengespeicherten Nummer mit der Nummer der neuen Nachricht ungleich eins, so liegt ein Fehlerfall vor. Es werden nun solange alle neuen Nachrichten von der entsprechenden Partneranlage verworfen, bis alle diese Anlage betreffenden Signalisierungen zurückverwaltet worden sind.

In der beschriebenen Lösung werden also potentiell fehlerhafte Signalisierungen von Vermittlungsstati von Team-Partnern auf der Partneranlage verworfen.

Sind nun alle Querbeziehungen wieder zurückverwaltet, so setzt die Signalisierung wieder neu auf, d.h. beim Erhalt der nächsten Nachricht von der Partneranlage wird die Nummer der Nachricht wieder in die globale Liste der Teamverwaltung übernommen, und es wird die Signalisierung im Team abgearbeitet. Erhält die Teamsteuerung einer TK-Anlage von einer Partneranlage eine Nachricht mit der Nummer Null, so ist dies ein Indiz dafür, das diese Anlage neu hochgelaufen ist ("Erstkontakt"). Falls für diese Partneranlage noch Rufsignalisierungen anstanden, so werden diese gegebenenfalls auch zurückverwaltet (siehe oben).

Zusätzlich zu den bereits beschriebenen Verfahren der Fehlererkennung nutzt die beschriebene Teamlösung das im folgenden beschriebene Verfahren, um zu erkennen, ob eine Partneranlage noch erreichbar ist. Die Teamsteuerung einer TK-Anlage verfügt in ihren globalen Daten über die Information, zu weichen Partneranlagen sie "aktive Beziehungen" unterhält. Es wird also die Information gepflegt, daß für mindestens einen "imaginären Team-Teilnehmer" der Partner Anlage "X" ein Vermittlungszustand ungleich frei signalisiert wird.

Beim Erhalt einer Nachricht von einer Partneranlage wird analog der Nummer der Nachricht auch ein Zeitstempel in einer globalen Liste (ein Eintrag für jede Partneranlage) gespeichert. Diese Liste wird nun zyklisch (z.B. einmal je Minute) für alle Partneranlagen abgearbeitet, zu denen aktive Beziehungen bestehen, d.h. es wird die aktuelle Systemzeit mit dem gespeicherten Zeitstempel des Erhalts der letzten Nachricht verglichen.

Wurde nun ein vorgegebener Grenzwert überschritten (z.B. zwei Minuten), so wird an die entsprechende Partneranlage eine Nachricht versandt, sich zu melden. Beantwortet die Partneranlage diese Anfrage ordnungsgemäß, so startet dieser Mechanismus nach der vorgegebenen Zeit von neuen, falls in der Zwischenzeit keine "normale" Nachricht von der Partneranlage eingetroffen ist. Antwortet die Partneranlage bis zum nächsten zyklischen Vergleich der Zeiten nicht, so gilt sie als nicht mehr erreichbar und alle Rufstati werden wie bereits beschrieben zurückverwaltet.

Dieser Mechanismus stellt sicher, daß nach einer endlichen Zeit nach dem Ausfall der Verbindung zu einer Partneranlage alle Rufe zurückverwaltet werden, d.h. ein Team-Ruf klingelt nicht ewig.

Der Vorteil des beschriebenen Mechanismus liegt darin, das ein Pollen der Partneranlagen nur dann stattfindet, wenn zu dieser Partneranlage aktive Beziehungen bestehen und über einen längeren Zeitraum keine Nachricht von dieser Anlage mehr signalisiert wurde. So wird der Nachrichtenverkehr zwischen den TK-Anlagen minimiert.

Aufgrund der langen Pollzeiten des oben beschriebenen "Live Controll"-Mechanismus ist es möglich, daß die Verbindung zu einer Partneranlage unterbrochen ist, dies ab noch nicht erkannt wurde. D.h. ein Team-Ruf für einen Team-Teilnehmer auf der Partneranlage wird noch signalisiert, obwohl dieser gar nicht mehr erreichbar ist. Wird nun versucht, diesen Team-Ruf zu übernehmen so wird dies durch die Vermittlungstechnik negativ quittiert. Diese negative Quittung wird als Indiz dafür bewertet, das der Team-Partner nicht mehr erreichbar ist und der betroffene Team-Ruf wird automatisch zurückverwaltet. Außerdem wird für die betroffene Partneranlage der oben beschriebene Mechanismus vorzeitig gestartet, es wird also an die Partneranlage die Nachricht "Hallo lebst du noch?" gesendet und wenn diese nicht innerhalb der festgelegten Zeit antwortet werden alle Querbeziehungen der Vermittlungsstati zu der Partneranlage zurückverwaltet.

## Patentansprüche

1. Verfahren zum Betrieb einer aus mehreren Teilnehmern bestehenden Teamkonfiguration in einer aus einer Mehrzahl von untereinander verbundenen Telekommunikationseinrichtungen bestehenden Anordnung,
**dadurch gekennzeichnet, daß**
die Telekommunikationseinrichtungen gleichrangig miteinander kommunizieren, wobei für jeden Teilnehmer in jeder Telekommunikationseinrichtungen neben den zum normalen Telekommunikationsbetrieb vorgesehenen Prozeßinstanzen eine reale oder eine imaginäre Instanz eingerichtet wird.

2. Verfahren nach Anspruch 1,
**dadurch gekennzeichnet, daß**
in einer Teamkonfiguration mit n Telekommunikationseinrichtungen jedem Teilnehmer eine reale Instanz und n-1 imaginäre Instanzen zugewiesen sind.

3. Verfahren nach Anspruch 1 oder 2,
**dadurch gekennzeichnet, daß**
jede Statusänderung eines Teilnehmers nur einmal an eine Partner-Telekommunikationseinrichtung signalisiert und in dieser die Steuerung der Teamfunktionalität durch die dem Teilnehmer dort zugewiesene imaginäre Instanz ausgeführt wird.

4. Verfahren nach einem der vorangehenden Ansprüche,
**dadurch gekennzeichnet, daß**
bei Erkennung des Ausfalls einer Telekommunikationseinrichtungen bzw. eines Routingweges zu dieser Telekommunikationseinrichtungen ein anstehender Team-Ruf selbsttätig beendet wird und alle Rufstati zurückverwaltet werden.

5. Verfahren nach Anspruch 4,
**dadurch gekennzeichnet, daß**
im Ansprechen auf eine Reaktivierung der ausgefallenen Telekommunikationseinrichtung kein Wiederauffrischen der Vermittlungsstati der Teilnehmer durchgeführt wird.

6. Verfahren nach einem der vorangehenden Ansprüche,
**dadurch gekennzeichnet, daß**
die Konfigurierung der Teamkonfiguration durch ein von einer Betriebssteuerung unabhängigem Programm ausgeführt wird, welches in einer der Telekommunikationseinrichtungen oder einem extern an die Anordnung angeschlossenen Datenverarbeitungseinrichtung implementiert ist.

7. Verfahren nach einem der vorangehenden Ansprüche,
**gekennzeichnet durch**
die Realisierung folgender Teamleistungsmerkmale über die gesamte Anordnung:
(1) Signalisierung von Team-Rufen,
(2) Signalisierung von Besetztzuständen, insbesondere über eine optische Anzeige am entsprechenden Endgerät,
(3) die Möglichkeit der Annahme eines Team-Rufes,
(4) die Möglichkeit des direkten Rufes eines Teilnehmers des Teams über eine Funktionstaste,
(5) die Möglichkeit der Zuteilung eines Gespräches an einen Teilnehmer des Teams über die Funktionstaste,
(6) die Möglichkeit einer Aktivierung/Deaktivierung der Verteilung eigener Rufe im Team und
(7) die Möglichkeit der Aktivierung/Deaktivierung einer Signalisierung anderer Team-Rufe am eigenen Endgerät.

8. Verfahren nach Anspruch 7,
**gekennzeichnet durch**
die freie Programmierbarkeit der Art der Signalisierung eines Team-Rufes über die Funktionstaste am einem jeweiligen Telekommunikations-Endgerät.

9. Verfahren nach Anspruch 7 oder 8,
**dadurch gekennzeichnet, daß**
die Signalisierung von Team-Rufen akustisch über einen Normalruf oder Kurzruf erfolgt.

10. Verfahren nach einem der Ansprüche 7 bis 9,
**dadurch gekennzeichnet, daß**
die Signalisierung von Team-Rufen optisch im Display oder an der Funktionstaste des jeweiligen Telekommunikations-Endgerätes erfolgt.

11. Verfahren nach einem der Ansprüche 7 bis 10,
**dadurch gekennzeichnet, daß**
die Annahme eines Team-Rufes, die Aktivierung/Deaktivierung der Signalisierung anderer Team-Rufe am Telekommunikations-Endgerät eines Teilnehmers und/oder die Aktivierung/Deaktivierung der Verteilung eigener Rufe im Team jeweils über eine spezielle Funktionstaste am Telekommunikations-Endgerät erfolgt.

12. Verfahren nach einem der Ansprüche 7 bis 10,
**dadurch gekennzeichnet, daß**
die Annahme eines Team-Rufes, die Aktivierung/Deaktivierung der Signalisierung anderer Team-Rufe am Telekommunikations-Endgerät eines Teilnehmers und/oder die Aktivierung/Deaktivierung der Verteilung eigener Rufe im Team jeweils über einen Menüpunkt einer, insbesondere optischen, Menüführung erfolgt.

13. Verfahren nach einem der vorangehenden Ansprüche,
**gekennzeichnet durch**
die Einbindung rein virtueller Teilnehmer mit eigener Rufnummer, aber ohne reale Instanz.

14. Anordnung zum Betrieb einer aus mehreren Teilnehmern bestehenden Teamkonfiguration mit einer Mehrzahl von untereinander verbundenen Telekommunikationseinrichtungen,
**dadurch gekennzeichnet, daß**
die Telekommunikationseinrichtungen
- jeweils eine der Steuerung von System-Telekommunikationsendgeräten zugeordnete Teamsteuerung,
- eine erste und zweite interne, direkt der Steuerung der System-Telekommunikationsendgeräte zugeordnete Schnittstelle, und
- eine erste und zweite externe, durch die Steuerung der System-Telekommunikationsendgeräte indirekt adressierte Schnittstelle als Konfigurations- bzw. Signalisierungsanschlüsse für eine teaminterne Signalisierung aufweisen.

15. Anordnung nach Anspruch 14,
**dadurch gekennzeichnet, daß**
die erste und zweite interne Schnittstelle die Steuerung der System-Telekommunikationsendgeräte und damit die Teamsteuerung mit einer Komponente Zentrale Betriebstechnik bzw. einer Komponente Zentrale Vermittlungstechnik verbinden.

16. Anordnung nach Anspruch 15,
**dadurch gekennzeichnet, daß**
die erste externe Schnittstelle die Komponente Zentrale Betriebstechnik mit einer entsprechenden Komponente einer anderen Telekommunikationseinrichtung oder einem Konfigurationstool und die zweite externe Schnittstelle die Komponenten Zentrale Vermittlungstechnik zweier Telekommunikationseinrichtungen miteinander verbindet.
